## Europäisches Patentamt

## European Patent Office

## Office européen des brevets

(19)

(11) Numéro de publication: **0232192
B1**

(12) ## FASCICULE DE BREVET EUROPEEN

(45) Date de publication du fascicule du brevet:
**19.04.89**

(51) Int. Cl.⁴: **A47C 1/026, B60N 1/06**

(21) Numéro de dépôt: **87400032.6**

(22) Date de dépôt: **09.01.87**

(54) Articulation pour dossier de siège à grain composite.

(30) Priorité: **07.02.86 FR 8601702**

(43) Date de publication de la demande:
**12.08.87 Bulletin 87/33**

(45) Mention de la délivrance du brevet:
**19.04.89 Bulletin 89/16**

(84) Etats contractants désignés:
**AT BE CH DE ES GB GR IT LI LU NL SE**

(56) Documents cités:
**EP-A- 0 121 452**
**FR-A- 1 414 700**
**FR-A- 2 377 175**
**FR-A- 2 530 436**

(73) Titulaire: **A & M COUSIN ETABLISSEMENTS COUSIN FRERES, Le Bois de Flers, F-61103 Flers Cédex(FR)**

(72) Inventeur: **Pipon, Yves, La Garenne St Georges des Groseillers, F-61100 Flers(FR)**
Inventeur: **Droulon, Georges, Rue de la Garenne St Georges des Groseillers, F-61100 Flers(FR)**

(74) Mandataire: **Madeuf, Claude Alexandre Jean et al, CABINET MADEUF 3, avenue Bugeaud, F-75116 Paris(FR)**

ACTORUM AG

## Description

La présente invention a pour objet une articulation, pour dossier de siège, qui est constituée d'une part, par un flasque solidaire de l'assise et donc fixe et d'autre part, par un deuxième flasque solidaire du dossier et donc mobile par rapport au flasque fixe prémentionné, ce flasque mobile étant monté sur un axe solidaire du flasque fixe.

On connaît déjà de nombreuses articulations pour dossier de siège dont l'organe de blocage, entre la partie fixe et la partie mobile, est constitué par un grain coulissant sous l'action d'une came, grain dont la partie inférieure est dentée pour coopérer avec la denture portée par la partie inférieure de la partie mobile de l'articulation, voir par exemple EP-A 0 121 452.

Or, il s'avère que ces articulations à grain unique ont un peu de jeu dû aux tolérances d'exécution permettant l'assemblage. Il faut noter également que, sous un effort anormal dû à un choc violent, le grain unique s'imprime sur la zone de guidage et qu'également, les dentures du grain qui coopèrent avec celles réalisées dans la partie mobile fléchissent. Il apparaît ainsi que le dossier n'est plus parfaitement fixé par rapport à l'assise, ce qui amoindrit le confort du siège et peut être la cause d'accidents graves lors de chocs ultérieurs importants.

De plus, pour augmenter le confort de l'utilisateur, l'on a été amené à utiliser des dentures de plus en plus fines et dont l'utilisation admet mal le boîtement du grain provoqué soit par un jeu obtenu par les tolérances ou le tassement de la matière sur la zone d'appui du grain.

La présente invention remédie à ces inconvénients en créant une articulation pour dossier de siège constituée par un flasque fixe et un flasque mobile. Le flasque fixe présente un dégagement dans lequel sont placés, d'une part, la came de commande et, d'autre part, un grain composite à denture inférieure courbe; ces pièces étant elles-mêmes contenues dans un dégagement du flasque mobile dont la partie inférieure présente une denture courbe coopérant avec la denture courbe portée par les parties inférieures du grain composite.

On obtient ainsi, grâce à un guidage correct du grain composite par les parois latérales du dégagement du flasque fixe et par l'angle choisi de la denture portée par la partie inférieure du grain composite, un blocage correct sans jeu du dossier par rapport à l'assise.

Conformément à l'invention, l'articulation pour dossier de siège à grain composite combinant un flasque fixe présentant un dégagement inférieur et un flasque mobile présentant également un dégagement plus grand en concordance avec le dégagement inférieur, ces deux flasques montés sur un axe O d'articulation haut pouvant se déplacer l'un par rapport à l'autre et être bloqués également l'un par rapport à l'autre au moyen d'un grain coulissant dont le déplacement est commandé par une came soumise à l'action d'un arbre entraîné par des moyens divers est caractérisée en ce que, d'une part, la came présente un redent et un bec et, d'autre part, le grain présente deux parties guidées par les parois parallèles du dégagement inférieur s'appuyant l'une sur l'autre le long d'une droite D1 de façon que leurs dentures inférieures coopèrent avec une denture du flasque mobile et en ce que la denture de l'une desdites parties pénètre dans la denture tandis que l'autre denture de l'autre partie ne pénètre que partiellement dans la denture, cette disposition assure ainsi le rattrapage des jeux lorsque le redent repousse vers le bas de ladite autre partie du grain.

Suivant une autre caractéristique de l'invention, le bec coopère avec une échancrure de la partie du grain pour dégager les dentures du grain de la denture du flasque mobile pour rendre libre le flasque mobile par rapport au flasque fixe, ce mouvement entraînant le dégagement du redent qui libère ainsi la partie du grain.

Diverses autres caractéristiques de l'invention ressortent d'ailleurs de la description détaillée qui suit.

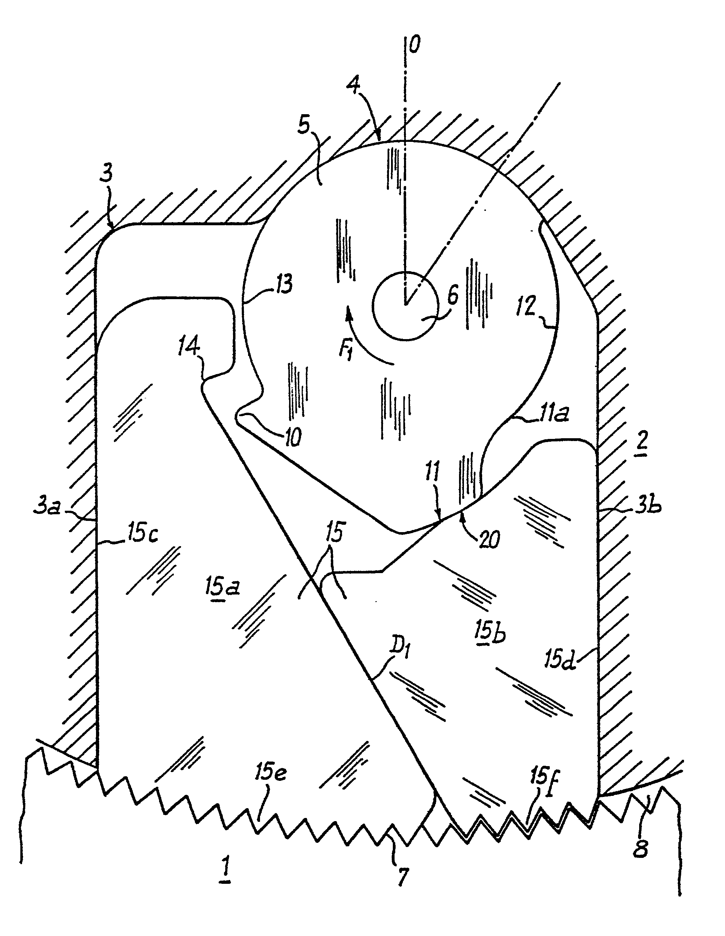

Une forme de réalisation de l'objet de l'invention est représentée, à titre d'exemple non limitatif, au dessin annexé.

La figure unique montre, à grande échelle, la partie centrale d'une articulation pour dossier de siège à grain composite.

Au dessin, on a représenté schématiquement l'axe O qui sert d'articulation au flasque mobile 1 par rapport au flasque fixe 2. Ce dernier comporte, à sa partie inférieure un logement ou dégagement 3 de forme sensiblement rectangulaire et qui se termine, à sa partie supérieure, par une alvéole semi-circulaire 4 destinée à contenir une came 5 solidaire d'un arbre 6, arbre dont la rotation est commandée soit manuellement, soit par un organe moteur par exemple un moteur électrique, pneumatique ou autre, même un électro-aimant. Les parois parallèles 3a, 3b du dégagement 3 sont parfaitement dressées pour obtenir un guidage parfait du grain composite 15. Du fait du décalage de l'axe O, le flasque mobile 1 solidaire du dossier du siège comporte, à sa partie inférieure, une denture 7 inscrite dans un dégagement 8 beaucoup plus grand que le dégagement 3. Ainsi, la denture 7 est longue et placée sur un arc de cercle dont le centre est situé sur l'axe O.

La came 5 présente un bec 10 et un redent 11, le redent 11 étant suivi sur son arrière 11a par une partie cylindrique 12 centrée sur l'arbre 6 tandis que le bec 10 est placé à la suite d'une partie cylindrique 13 centrée également, sur l'arbre 6 mais d'un rayon différent. Le bec 10 est destiné à coopérer avec une échancrure 14 de la partie 15a du grain 15 dont la partie 15b est soumise à l'action du redent 11.

Les parties 15a–15b du grain 15 sont jointives le long d'une droite $D_1$ dont l'inclinaison est telle que les bords extérieurs 15c–15d des parties 15a–15b du grain composite 15 s'appliquent parfaitement le long des parois parallèles 3a, 3b du dégagement 3.

Les dentures 15e–15f des parties 15a–15b du grain composite 15 sont identiques et, de ce fait, la denture 15e de la partie 15a pénètre convenablement dans la dent de la denture 7 du flasque mobile 1 mais les cotes de la partie 15b du grain 15 sont telles que les dents 15f ne peuvent, en aucun cas, entrer complètement dans les dents de la denture 7 mais, au contraire, sont légèrement en retrait pour assurer un blocage parfait des dents 15e de la partie 15a du grain 15. Tant que le redent 11 s'applique sur la partie centrale 20 de la partie 15b du grain, cette partie applique parfaitement la partie 15a du grain 15 contre la denture 7 et, de ce fait, le flasque mobile 1 est parfaitement solidaire du flasque fixe 2 en assurant ainsi un verrouillage parfait du dossier par rapport à l'assise du siège considéré.

Si, au cours du fonctionnement, et du fait d'une usure des dents, il se produit un léger jeu, celui-ci est immédiatement compensé puisque les dents 15f peuvent toujours se rapprocher de la denture 7 en repoussant parfaitement les dents 15e dans la denture 7. On évite ainsi tous jeux du dossier par rapport à l'assise du siège.

Lorsque l'on désire déverrouiller le dossier par rapport à l'assise, on procède de la façon suivante:

On entraîne, à l'aide d'un moyen manuel ou motorisé, l'arbre 6 de façon à l'entraîner dans le sens de la flèche F₁ (voir dessin), ce qui a pour effet:

a) d'amener le bec 10 en contact avec l'échancrure 14 et donc de soulever la partie 15a du grain 15,

b) de dégager le redent 11 de la partie centrale 20 de la partie 15b du grain 15 si bien que le grain est poussé vers le haut et que, de ce fait, les dents 15e–15f se séparent de la denture 7.

A ce moment, le flasque mobile 1 est libre par rapport au flasque fixe 2 et l'on peut donc choisir le position du dossier que l'on désire en poussant sur ce dossier contre l'action du ou des ressorts de rappel normalement existants.

Lorsque la position choisie est trouvée, on ramène l'arbre 6 dans le sens contraire à celui de la flèche F₁, ce qui provoque immédiatement le mouvement vers le bas du grain 15 du fait que la partie 15b de ce grain est repoussée par le redent 11 et que la partie 15a est entraînée par la partie 15b.

L'angle, que fait la droite D1 avec l'horizontale qui est compris entre 55 et 65° plus spécialement entre 58 et 62°, est choisi de façon à donner un mouvement de glissement correct assurant la mise en place facile et aisée des deux parties 15a, 15b du grain 15 sans risque d'un coincement gênant.

## Revendications

1. Articulation pour dossier de siège à grain composite combinant un flasque fixe (2) présentant un dégagement inférieur (3) et un flasque mobile (1) présentant un dégagement plus grand en concordance avec le dégagement inférieur (3) et plus grand que ce dernier, ces deux flasques (1, 2) montés sur un axe (O) d'articulation haut pouvant se déplacer l'un par rapport à l'autre et être bloqués également l'un par rapport à l'autre au moyen d'un grain coulissant (15) dont le déplacement est commandé par une came (5) soumise à l'action d'un arbre (6) entraîné par des moyens divers, caractérisée en ce que, d'une part, la came (5) présente un redent (11) et un bec (10) et, d'autre part, le grain présente en deux parties (15a–15b) guidées par les parois parallèles (3a–3b) du dégagement inférieur (3) s'appuyant l'un sur l'autre le long d'une droite (D1) de façon que leurs dentures inférieures (15e–15f) coopèrent avec une denture (7) du flasque mobile (1) et en ce que la denture (15e) de l'une desdites parties pénètre dans la denture (7) tandis que la denture (15f) de la partie (15b) desdites parties ne pénètre que partiellement dans la denture (7) pour assurer ainsi le rattrapage des jeux lorsque le redent (11) repousse vers le bas de ladite autre partie (15b) du grain (15).

2. Articulation suivant la revendication 1, caractérisée en ce que le bec (10) coopère avec une échancrure (14) de la partie (15a) du grain (15) pour dégager les dentures (15e–15f) du grain (15) de la denture (7) du flasque mobile (1) pour rendre libre le flasque mobile (1) par rapport au flasque fixe (2), ce mouvement entraînant le dégagement du redent (11) qui libère ainsi la partie (15b) du grain (15).

3. Articulation suivant l'une des revendications 1 et 2, caractérisée en ce que l'angle de la droite D1 formé par les surfaces d'appui des parties (15a–15b) du grain (15) est compris entre 55 et 65° plus spécialement entre 58 et 62°.

## Patentansprüche

1. Gelenk für die Rückenlehne eines Sitzes mit zusammengesetztem Körper, der aus einem festen, eine untere Ausnehmung (3) aufweisenden Teil (2) und einem beweglichen, eine in bezug auf die untere Ausnehmung (3) grössere Ausnehmung aufweisenden Teil (1) besteht, wobei diese beiden Teile (1, 2), welche auf einer oberen Gelenkachse (O) gelagert sind, mittels eines Schiebers (15) gegeneinander verstellt und arretiert werden können, dessen Bewegung durch einen Nocken (5) gesteuert ist, der von einer durch verschiedene Mittel angetriebenen Welle (6) angetrieben wird, dadurch gekennzeichnet, dass einerseits der Nocken (5) einen Vorsprung (11) und eine Nase (10) aufweist und dass andererseits der Körper zwei Teile (15a, 15b) aufweist, die von parallelen Wandungen (3a, 3b) der unteren Ausnehmung (3) geführt sind und sich so entlang einer Gerade (D1) gegeneinander abstützen, dass deren untere Verzahnungen (15e, 15f) mit der Verzahnung (7) des beweglichen Teils (1) zusammenwirken und die Verzahnung (15e) des einen der genannten Teile in die Verzahnung (7) eindringt, während die Verzahnung (15f) der genannten Teile (15b) nur teilweise in die Verzahnung (7) eindringt, damit die Spiele ausgeglichen werden, wenn der Vorsprung (11) den anderen Teil (15b) des Körpers (15) nach unten schiebt.

2. Gelenk nach Anspruch 1, dadurch gekennzeichnet, dass die Nase (10) mit einer Ausnehmung (14) des Teils (15a) des Körpers (15) zusammenwirkt, damit die Verzahnungen (15e, 15f) des Körpers (15) von der Verzahnung (7) des beweglichen Teils (1) und der bewegliche Teil (1) vom festen Teil (2) freigemacht werden, so dass der Vorsprung (11) frei wird und den Teil (15b) des Körpers (15) freimacht.

3. Gelenk nach einem der Ansprüche 1 oder 2, dadurch gekennzeichnet, dass der Winkel der Gerade D1, der von den Auflageflächen der Teile (15a, 15b) des Körpers (15) gebildet ist, zwischen 55 und 65°, vorzugsweise zwischen 58 und 62° liegt.

## Claims

1. Articulation for seat back with composite bearing plate combining a fixed flange (2) having a lower recess (3) and a mobile flange (1) having a greater recess in registration with the lower recess (3) and larger than the latter, these two flanges (1, 2) mounted on a high level articulation axis (O) being respectively movable and also securable with respect to one another by means of a sliding bearing plate (15), the displacement of which is controlled by a cam (5) subjected to the action of a shaft (6) driven by various means, characterized in that, on the one hand, the cam (5) is provided with a stepped portion (11) and a nose (10) and, on the other hand, the bearing plate has two parts (15a, 15b) guided by the parallel walls (3a–3b) of the lower recess (3) bearing one on the other along a straight line (D1), so that their lower toothings (15e–15f) cooperate with a toothing (7) of the mobile flange (1), and in that the toothing (15e) of one of said parts penetrates in the toothing (7) while the toothing (15f) of the part (15b) of said parts penetrates only in part in the toothing (7), so to provide the play compensation when the stepped portion (11) pushes towards the bottom of said another part (15b) of the bearing plate (15).

2. Articulation according to claim 1, characterized in that the nose (10) cooperates with a notch (14) of the part (15a) of the bearing plate (15) for disengaging the toothings (15e–15f) of the bearing plate (15) from the toothing (7) of the mobile flange (1), so to make the mobile flange (1) free with respect to the fixed flange (2), this movement causing the disengagement of the stepped portion (11) which thus frees the part (15b) of the bearing plate (15).

3. Articulation according to one of claims 1 and 2, characterized in that the angle of the straight line (D1) made by the bearing surfaces of the parts (15a–15b) of the bearing plate (15) is comprised between 55 and 65°, more specially between 58 and 62°.